# EUROPÄISCHE PATENTANMELDUNG

(11) **EP 0 857 469 A2**
(43) Veröffentlichungstag der Anmeldung: **12.08.1998**
(21) Anmeldenummer: 98101583.7
(22) Anmeldetag: 30.01.1998
(51) Int. Cl.: A61C 13/273

(54) **Aktiviervorrichtung für die dentale Prothetik, aktivierbares dentales Geschiebe sowie Mittel und Verfahrens zu dessen Herstellung**

(30) Priorität: 05.02.1997 DE 19704170
(71) Anmelder: Hackstein, Peter, 58339 Breckerfeld (DE); Hackstein, Ortur, 58339 Breckerfeld (DE)
(72) Erfinder: Hackstein, Peter, 58339 Breckerfeld (DE); Hackstein, Ortrud, 58339 Breckerfeld (DE)
(74) Vertreter: Schröter & Haverkamp

(57) **Zusammenfassung**

Eine Aktiviervorrichtung 1 für die dentale Prothetik zur Herstellung einer lösbaren Verbindung zwischen einem Sekundärteil und einem Primärteil weist zwei voneinander beabstandete und miteinander zusammenwirkend im Eingriff stehende Aktivierelemente 2, 3 auf. Der Abstand der beiden Aktivierelemente 2, 3 ist zum Aktivieren der Vorrichtung 1 gegeneinander einrichtbar. Zwischen den beiden Aktivierelementen 2, 3 sind ein oder mehrere Spreizelemente 4 angeordnet, die beim Aktivieren der Vorrichtung 1 zumindest abschnittsweise in radialer Richtung ausstellbar sind. Das bzw. die Spreizelemente 4 stützen sich zumindest an einem Aktiverelement 2, 3 ab, so daß eine Aktivierung der Vorrichtung zur radialen Abspreizung des oder der Spreizelemente 4 führt.

## Beschreibung

Die Erfindung betrifft eine Aktiviervorrichtung für die dentale Prothetik zur Herstellung einer lösbaren Verbindung zwischen einem Sekundärteil mit einem Primärteil, welche Aktiviervorrichtung ein Aktivierelement aufweist, daß mit einem Friktionsmittel zusammenwirkt, welches beim Aktivieren der Vorrichtung zum Befestigen des Sekundärteils an dem Primärteil durch eine in dem Sekundärteil radial angeordnete Aktivierungsöffnung aus dieser austretend bewegbar ist.

Ferner betrifft die Erfindung ein aktivierbares dentales Geschiebe zur Verwendung einer solchen Aktiviervorrichtung sowie Mittel sowie ein Verfahren zum Herstellen eines solchen Geschiebes.

Aus der DE 195 26 176 C1 ist ein extrakoronales Geschiebe mit einer Aktiviervorrichtung bekannt. Die Aktiviervorrichtung umfaßt eine Aktivierschraube, deren einschraubseitiges Ende konisch verjüngt ausgebildet ist. Dieser konische Abschnitt wirkt mit einer einem Druckstück zugeordneten Keilfläche zusammen, so daß beim Einschrauben der Aktivierschraube das Druckstück in einer Führung gehalten in radialer Richtung von der Aktivierschraube wegbewegt wird. Die vordere als Druckfläche ausgebildete Seite des Druckstückes wirkt dann gegen die Oberfläche des die Patrize im Bereich ihres Gleitstückes umgebendes Friktionsteils. Mit diesem Geschiebe ist eine starre, nicht nachgiebige Verbindung zwischen der Patrize und der Matrize erstellbar. Aufgrund der hohen auf diese Verbindung einwirkenden Querkräfte kann es vorkommen, daß sich eine Verklemmung des in der Matrize aufgenommen Patrizenteils einstellt. Ein Abziehen des die Matrize tragenden Zahnersatzes ist dann nicht ohne weiteres möglich.

Es ist eine weitere Aktiviervorrichtung für derartige Geschiebe bekannt, die eine in einer Gewindehülse gehaltene Aktivierschraube und eine in gewissen Grenzen nachgiebige Friktionsmasse, auf die die Aktiverschraube zum Aktivieren der Vorrichtung einwirkt, umfaßt. Die Vorrichtung ist zum Einsetzen in eine in dem Sekundärteil angeordnete Aufnahme, etwa in einer Patrize vorgesehen, welche randlich - d.h. in radialer Anordnung - eine Aktivierungsöffnung aufweist. Die Aktiviervorrichtung wird wie folgt montiert: In den oberen Abschnitt der Aufnahme wird zunächst die außenseitig Retentionen aufweisende Gewindehülse eingesetzt. Anschließend wird die Aufnahme mit der Friktionsmasse, etwa einer Silikonmasse befüllt und abgewartet, bis diese ausgehärtet ist. Durch Aktivieren der Aktivierschraube, die in die Gewindehülse zuvor eingeschraubt worden ist, wirkt der Schraubenfuß kolbenähnlich gegen die Friktionsmasse. Diese wird daher aus der seitlich offenen Aufnahme der Patrize herausgequetscht. Ist nun die Patrize in eine am Primärteil angeordnete Matrize eingesetzt, wird durch die aus der Aktivierungsöffnung ausgepreßte Friktionsmasse ein Friktionschluß zwischen den beiden ineinandergefügten Teilen hergestellt.

Durch Verwendung einer deformierbaren Masse ist die Qualität der Friktionsverbindung zwischen dem Sekundärteil und dem Primärteil vornehmlich durch die reibungserhöhenden Materialeigenschaften der Friktionsmasse abhängig, auch wenn diese Eigenschaft durch unterschiedliche Druckbeaufschlagung der Masse mit Hilfe der Aktivierschraube in gewissem Maße einstellbar ist. Nachteilig ist jedoch, daß es durch die Verwendung einer solchen Masse aufgrund ihrer recht hohen Haftreibung mitunter schwierig ist, ein Sekundärteil mit einer Aktiviervorrichtung mit entsprechender Vorspannung - d.h. mit geringfügig ausgepreßter Friktionsmasse - in die am Primärteil vorgesehene Matrize einzusetzen, wie dies beispielsweise bei Geschieben vorgesehen ist. Es besteht die Gefahr, beim Einsetzen des Sekundärteiles die aus der Aktivierungsöffnung geringfügig ausgetretene Fixiermasse abzuscheren, so daß das Sekundärteil nochmals abgenommen werden muß, die Aktiviervorrichtung nochmals aktiviert werden muß und sich der Vorgang wiederholen muß. Darüber hinaus kann es vorkommen, daß ein solcher Abschervorgang unbemerkt bleibt und somit möglicherweise nur eine unzureichende Befestigung des Sekundärteiles an dem Primärteil gegeben ist.

Damit die Fixiermasse ihre bestimmungsgemäße Funktionalität erhalten kann, muß diese plastisch verformbar sein. Da auf der anderen Seite zwei miteinander zu befestigende Elemente, etwa eine Patrize und eine Matrize eines Geschiebes ein gewisses Spiel aufweisen müssen, vermag die herausgequetschte Fixiermasse oftmals keinen ausreichend festen Sitz des Sekundärteiles am Primärteil zu gewährleisten. Die Nachgiebigkeit liegt daher mitunter oberhalb eines tollerierbaren Maßes.

Zum bestimmungsgemäßen Funktionieren der Aktivierungsvorrichtung ist es notwendig, die Gewindehülse fest in die Aufnahme des Sekundärteiles einzusetzen. Zu diesem Zweck wird diese entweder mit dem Sekundärteil laserverschweißt oder in die entsprechende Aufnahme des Sekundärteiles eingeklebt. Ein Entfernen der Aktivierungsvorrichtung insbesondere zu Reinigungszwecken oder zum Erneuern der Fixiermasse ist daher nicht ohne weiteres möglich.

Ausgehend von diesem diskutierten Stand der Technik liegt der Erfindung daher die Aufgabe zugrunde, eine Aktiviervorrichtung für die dentale Prothetik zur Herstellung einer lösbaren Verbindung zwischen einem Sekundärteil und einem Primärteil vorzuschlagen, die nicht nur bezüglich ihrer Verklemmwirkung verbesserte Eigenschaften aufweist, sondern auch problemlos wieder von den Sekundärteil entfernbar ist. Ferner liegt der Erfindung die Aufgabe zugrunde ein aktivierbares dentales Geschiebe mit einer solchen Aktiviervorrichtung sowie Mittel zum Herstellen eines solchen Geschiebes und ein Verfahren zum Herstellen eines solchen Geschiebes bereitzustellen. Diese Aufgabe wird erfindungsgemäß zunächst dadurch gelöst, daß die Aktiviervorrichtung zwei voneinander beabstandete und miteinander zusammenwirkend im Eingriff stehende Aktivierelemente umfaßt, deren Abstand zueinander zum Aktivieren der Vorrichtung einrichtbar ist, und daß zwischen den Aktivierelementen als Friktionsmittel ein oder mehrere, sich zumindest an einem der beiden Aktivierelemente abstützende Spreizelemente angeordnet sind, die beim Aktivieren der Vorrichtung zumindest abschnittsweise in radialer Richtung ausstellbar sind.

Ferner wird zur Lösung der Aufgabe ein aktivierbares dentales Geschiebe mit einer solchen Aktiviervorrichtung vorgeschlagen, welches eine Patrize mit einer längsachsial angeordneten Aufnahme zur Aufnahme der Aktiviervorrichtung und mit einer radial angeordneten Aktivierungsöffnung sowie eine Matrize umfaßt, deren Patrizenaufnahme komplementär zur Aufnahme der Patrize ausgebildet ist.

Ferner werden zur Lösung der Aufgabe Mittel zum Herstellen eines solchen Geschiebes vorgeschlagen, die ein aus rückstandsfrei verbrennbaren Kunststoff hergestelltes Patrizenelement, einen Platzhalter zur Erzeugung einer Patrizenaufnahme sowie einen Platzhalter zum Erzeugen der Matrize umfassen.

Schließlich wird zur Lösung der Aufgabe ein Verfahren zum Herstellen eines solchen Geschiebes vorgeschlagen, gemäß dem die notwendigen dem Sekundärteil bzw. Primärteil zugeordneten Elemente - Patrize bzw. Matrize - durch Mitgießen erstellbar sind.

Durch Verwendung von zwei voneinander beabstandeten und miteinander zusammenwirkend im Eingriff stehenden Aktivierelementen ist eine Vorrichtung geschaffen, mit der durch Einrichten der beiden Aktivierelemente zueinander auf ein zwischen den beiden Elementen angeordnetes Fixiermittel Kräfte ausübbar sind, wobei ein solcher Aktivierungsvorgang auch dann erfolgen kann, wenn die Aktiviervorrichtung nicht in eine einem Sekundärteil entsprechend zugeordnete Aufnahme eingesetzt ist. Daher ist es möglich, die Aktiviervorrichtung in dem Sekundärteil allein durch die im aktivierten Zustand auf ein Primärteil ausgeübte Verklemmkraft zu halten.

Die Verwendung von zwischen den Aktivierelementen angeordneten Spreizelementen, die sich zumindest an einem der beiden Aktivierelemente abstützen, erlaubt eine kontrollierte Kraftbeaufschlagung der Spreizelemente und somit eine ungedämpfte Einstellung der gewünschten Friktion. Die Spreizelemente sind aus einem festen, unter den bestimmungsgemäßen Anforderungen plastisch nicht deformierbaren Material, etwa einem Edelstahl, gefertigt.

In einem Ausführungsbeispiel ist vorgesehen, daß als erstes Aktivierelement eine Aktivierschraube und das als weiteres, mit diesem im Eingriff stehendes Aktivierelement eine Spannmutter vorgesehen ist. Zweckmäßigerweise wird bei der Aktiviervorrichtung ein einziges Spreizelement verwendet, welches als Spreizzunge ausgebildet ist, die mit ihrem einen Ende an der Aktivierschraube angelenkt und abgestützt und deren freies Ende an der Spannmutter abgestützt ist. Dabei kann in einer Ausgestaltung dieses Ausführungsbeispiel vorgesehen sein, daß die Spreizzunge mit ihrer Innenseite an der Außenseite der Spannmutter anliegt. Zweckmäßigerweise ist diese Spannmutternseite als schiefe Ebene ausgebildet, so daß beim Einschrauben der Aktivierschraube in die Spannmutter die Spreizzunge in ihrem unteren, an der Spannmutter anliegenden Abschnitt radial von der Aktivierschraube wegbewegt wird und aus einer radial angeordneten Aktivierungsöffnung austreten kann. In einer weiteren Ausgestaltung dieses Ausführungsbeispieles ist die Spreizzunge mit ihrem unteren Abschnitt auf der Oberseite der Spannmutter abgestützt gehalten, so daß beim Aktivieren der Vorrichtung die Spreizzunge etwa im Bereich ihres mittleren Abschnittes ausbaucht. Je nach dem in welchem Maße eine Restfederwirkung der Spreizzunge gewünscht ist, kann die eine oder andere Lösung verwendet werden.

Die Spreizzunge weist zweckmäßigerweise einen oberen abgewinkelten Abschnitt auf, der eine etwa U-förmige Ausnehmung aufweist, mit der die Spreizzunge in eine unterhalb des Schraubkopfes der Aktivierschraube eingebrachte umlaufende Nut einsetzbar ist. Dieser abgewinkelte Abschnitt der Spreizzunge ist zweckmäßigerweise über den größten Durchmesser der Aktivierschraube hinauskragend ausgebildet. Mit einer solchen Ausbildung kann der auskragende Abschnitt als Retention zum Verrasten der Aktiviervorrichtung in einer dem Sekundärelement zugeordneten Aufnahme verwendet werden.

Weitere Vorteile und Ausgestaltungen der Erfindung sind Bestandteil der nachfolgenden Beschreibung unter Bezugnahme auf die Figuren. Es zeigen:
- **Fig. 1:**: Einen Längsschnitt durch eine Aktiviervorrichtung zur Herstellung einer lösbaren Verbindung zwischen einem Sekundärteil und einem Primärteil,
- **Fig. 2:**: einen im Maßstab verkleinerter Querschnitt durch die Aktiviervorrichtung der Figur 1 entlang der Linie I-I,
- **Fig. 3:**: die Aktiviervorrichtung der Figur 1 in einer ersten Aktivierungsstellung,
- **Fig. 4:**: die Aktiviervorrichtung der Figur 1 in einer zweiten Aktivierstellung,
- **Fig. 5 a - g:**: einzelne Verfahrensschritte zur Herstellung eines Geschiebes zur Verwendung der Aktiviervorrichtung durch Mitgießen von Matrize und Patrize und
- **Fig.6:**: einen Querschnitt durch ein an einem Primärteil mittels der Aktiviervorrichtung gehaltenes Sekundärteil.

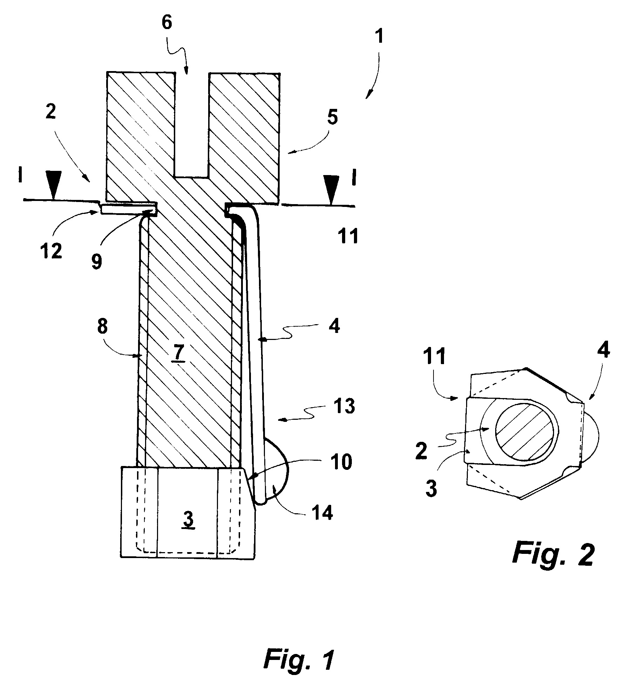

Figur 1 zeigt eine Aktiviervorrichtung 1 bestehend aus einer Aktivierschraube 2, einer Spannmutter 3 und einem an der Aktivierschraube 2 eingehängten Spreizelement 4. Die Aktivierschraube 2 umfaßt einen Schraubenkopf 5, in dem zum Aktivieren der Aktivierschraube 2 ein Schlitz 6 eingebracht ist. An den Schraubenkopf 5 grenzt unterseitig ein Schraubenschaft 7, in den außenseitig ein Gewinde 8 eingebracht ist. Die Aktivierschraube ist bei dem in Figur 1 dargestellten Ausführungsbeispiel als M1,2-Schraube ausgebildet.

Zwischen dem Schraubenkopf 5 und dem Schraubenschaft 7 ist in die Aktivierschraube eine umlaufende Nut 9 eingebracht. Die Nut 9 dient zur Aufnahme und zum Einhängen des oberseitigen Endes des Spreizelementes 4.

Der Fuß des Schraubenschaftes 7 der Aktivierschraube 2 greift in die Spannmutter 3 ein. Die Spannmutter 3 ist als Sechskantmutter ausgebildet. Eine Seitenfläche 10 der Spannmutter 3 ist zum Schraubenschaft 7 hin geneigt ausgebildet und dient als schiefe Ebene, auf der beim Aktivieren der Aktiviervorrichtung das Spreizelement 4 mit seinem freien Ende entlang gleitend radial ausstellbar ist.

Das Spreizelement 4 weist in seinem oberen Abschnitt einen abgewinkelten, U-förmig ausgebildeten Einhängeabschnitt 11 auf. Mit diesem Einhängeabschnitt 11 ist das Spreizelement 4 in die Nut 9 eingesetzt. Das vordere Ende 12 des Einhängeabschnittes 11 ist über den größten Durchmesser der Aktivierschraube 2 hinauskragend ausgebildet. Dieses hervorstehende Ende 12 kann somit als Verklammerungsglied dienen, um die Aktiviervorrichtung 1 in einer am Sekundärteil angeordneten Aufnahme zu fixieren.

Das freie Ende des Spreizelementes 4 bildet bei dem in Figur 1 dargestellten Ausführungsbeispiel einen Friktionsabschnitt 13, mit dem ein Friktionsschluß mit einem Primärteil hergestellt werden soll. Zu diesem Zweck trägt dieses Ende des Spreizelementes 4 eine Friktionssicke 14.

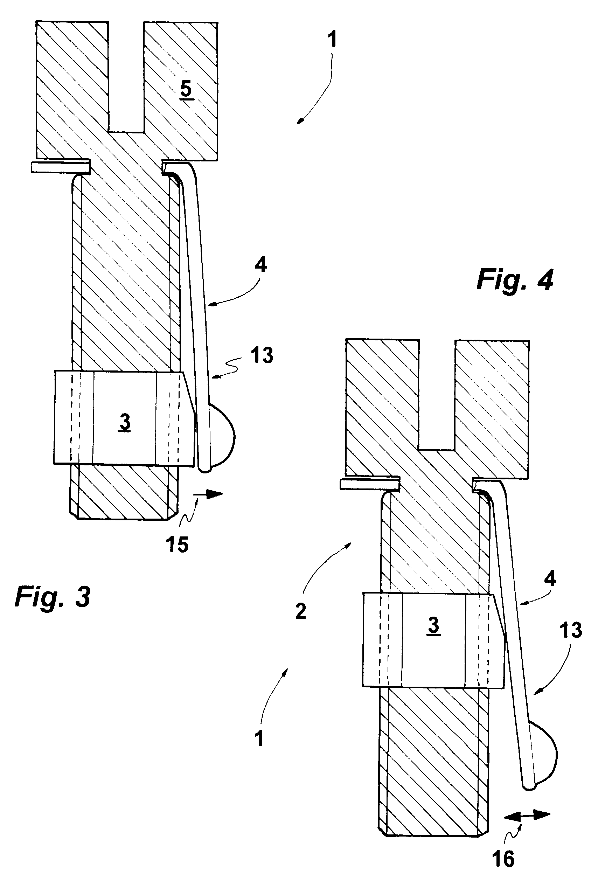

Aus dem in Figur 2 dargestellten Schnitt entlang der Linie I-I ist die Konfigurierung des Spreizelementes 4, insbesondere seines Einhängeabschnittes 11 bezüglich der Aktivierschraube 2 ersichtlich. Zum Betätigen der Aktiviervorrichtung 1 wird die Aktivierschraube 2 durch Ansetzen eines geeigneten, in den Schlitz 6 eingreifenden Schraubendrehers in die drehfestgehaltene Spannmutter 3 eingeschraubt. Dabei ist vorgesehen, daß sich der Schraubenkopf 5 unterseitig abstützt, so daß die Spannmutter 3 zum Schraubenkopf 5 hin bewegt wird. Das mit seinem Friktionsabschnitt 13 an der Außenseite der Spannmutter 3 anliegende Spreizelement 4 wird infolge dieser Bewegung radial gemäß dem Pfeil 15 ausgestellt. Diese Situation ist in Figur 3 abgebildet.

Figur 4 zeigt die Aktiviervorrichtung 1, nachdem die Aktivierschraube 2 weiter in die Spannmutter 3 eingeschraubt worden ist, so daß der Friktionsabschnitt 13 des Spreizelementes 4 entsprechend weiter radial ausgestellt worden ist. Eine solche Anordnung ist insbesondere dann als aktivierte Stellung vorgesehen, wenn durch die Aktiviervorrichtung ein Friktionsschluß mit einer gewissen Federwirkung bzw. einer gewissen nachgiebigen Wirkung hergestellt werden soll. Der Friktionsabschnitt 13 des Spreizelementes 4 vermag bei der in Figur 3 dargestellten Stellung eine gewisse Federung gemäß dem Pfeil 16 auszuüben. Zu diesem Zweck ist vorgesehen, daß das Spreizelement 4 aus einem materialelastischem Metall hergestellt ist.

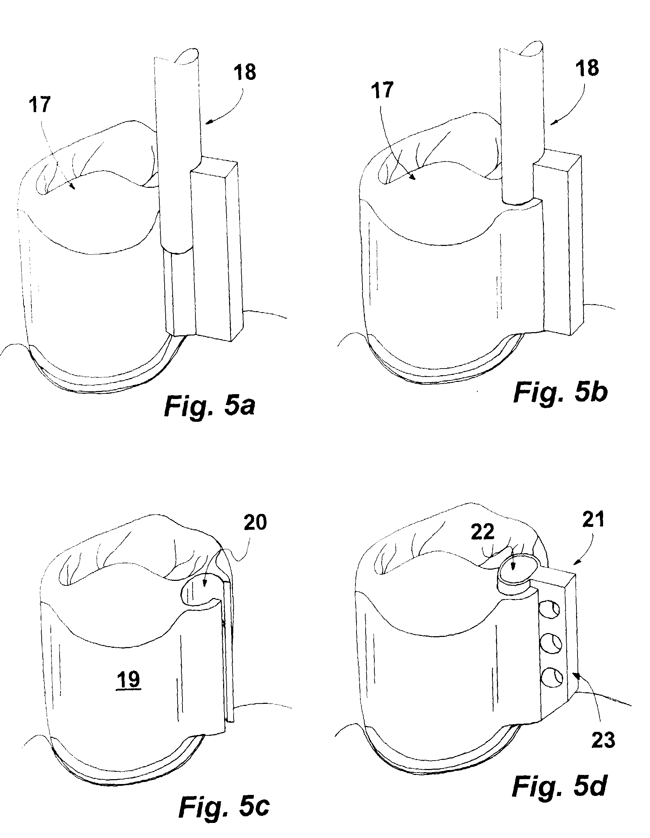

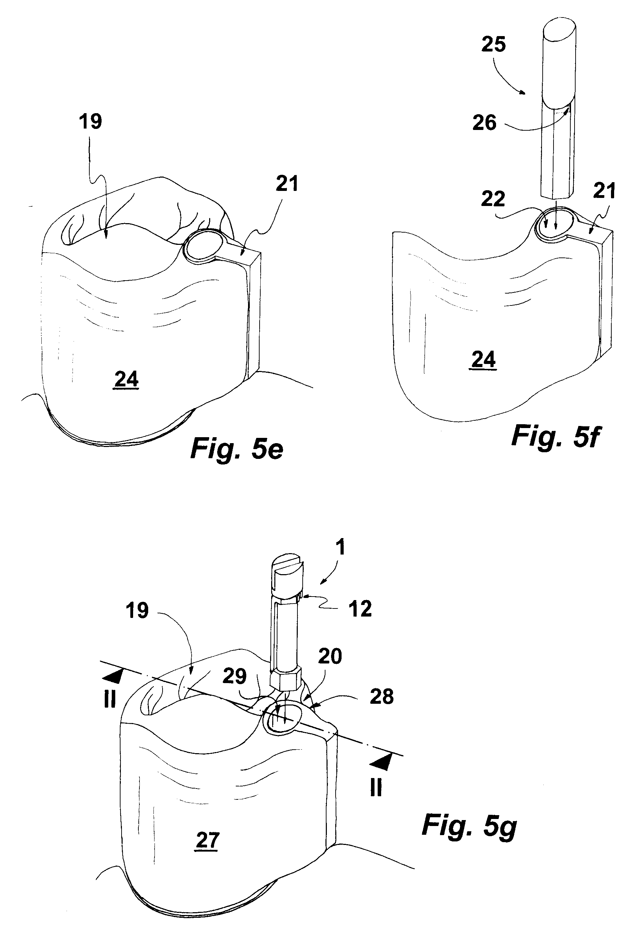

In der Figurenfolge 5a bis 5g sind nachfolgend die Verfahrensschritte zur Herstellung eines aktivierbaren dentalen Geschiebes, welches mit der Aktiviervorrichtung 1 aktivierbar ist, erläutert. An das Wachsmodell 17 einer Primärkrone wird, wie in Figur 5a gezeigt, in einem ersten Schritt ein Keramikplatzhalter 18 angewachst. Der Keramikplatzhalter 18 dient zum Erstellen der der Primärkrone zugeordneten Matrize, in welche die dem Sekundärteil zugeordnete Patrize einschiebbar ist. Das Wachsmodell 17 mit dem angewachsten Keramikplatzhalter 18 ist in Figur 5b dargestellt.

Anschließend wird das Wachsmodell eingebettet und gegossen, woran sich als weiterer Verfahrensschritt das Entfernen des Keramikplatzhalters 18 durch Sandstrahlen anschließt. Die fertiggestellte Primärkrone 19 mit der mitgegossenen Matrize 20 zeigt Figur 5c.

Zur Erstellung der dem Sekundärteil zugeordneten Patrize wird in dem in Figur 5d dargestellten Arbeitsschritt zunächst ein aus rückstandsfrei verbrennbaren Kunststoff gefertigtes Patrizenelement 21 in die fertiggestellte Matrize 20 eingesetzt. Das Patrizenelement 21 besitzt eine Aufnahme 22 und einen Retentionssteg 23. Die Dimensionierung der Aufnahme 22 entspricht bereits derjenigen, der späteren Aufnahme zur Aufnahme der Aktiviervorrichtung 1. Das Patrizenelement 21 weist im unteren Bereich seiner Aufnahme 22 eine in Figur 5d nicht erkennbare, parallel zur Längsachse der Aufnahme 22 angeordnete Ausnehmung als Aktivierungsöffnung auf, aus der der Friktionsabschnitt 13 der Aktivierungsvorrichtung 1 austreten soll. Bei dem dargestellten Ausführungsbeispiel wird das Patrizenelement 21 anschließend mit einem Schubverteilungsarm 24 verwachst. Dieser Verfahrensschritt ist in Figur 5e dargestellt.

Anschließend wird das Patrizenelement 21 mit dem angewachsten Schubverteilungsgsarm 24 von der Primärkrone 19 entfernt und zum Einbetten und Gießen vorbereitet. Dazu ist es notwendig, vor dem Einbetten dieses aus Patrizenelement 21 und Schubverteilungsarm 24 bestehenden Sekundärteiles in die Aufnahme 22 einen weiteren Keramikplatzhalter 25 einzusetzen (vgl. Figur 5c). Der Keramikplatzhalter 25 ist in seinem unteren Abschnitt entsprechend der Außenkontur der Spannmutter 3 sechseckig ausgebildet. Folglich entsteht in dem späteren Gußstück in diesem Bereich eine sechseckige Aufnahme, in welcher die Spannmutter 3 verdrehfest gehalten ist. Ferner weist der Keramikplatzhalter 25 umfänglich hervorstehende Fixiernasen 26 auf, die dazu dienen, in dem späteren Gußstück Aussparungen für die vorderen, zur Verrastung vorgesehen Enden 12 der Aktiviervorrichtung 1 zu erstellen.

Figur 5g zeigt die Primärkrone 19 und das fertiggestellte Sekundärteil 27, welches mit seiner Patrize 28 in die Matrize 20 der Primärkrone 19 eingesetzt ist. Zum Aktivieren dieses Geschiebes wird anschließend die Aktiviervorrichtung 1 in die durch den Keramikplatzhalter 25 geschaffene Aufnahme 29 eingesetzt, bis die vorderen Enden 12 in die durch die Fixiernasen 26 frei gehaltenen Aussparungen einrasten.

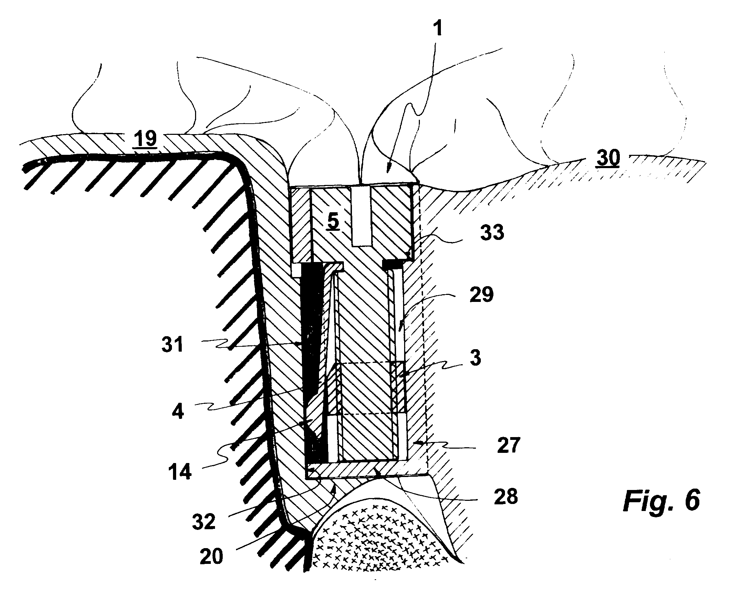

Figur 6 zeigt einen schematischen Schnitt entlang der Linie II-II der Figur 5g, wobei an dem Sekundärteil 27 eine Zahnprothese 30 angeordnet ist. Das Sekundärteil 27 ist mit seiner Patrize 28 in die Matrize 20 der Primärkrone 19 eingesetzt. Die Aktiviervorrichtung 1 ist aktiviert, wobei das Spreizelement 4 mit seiner Friktionssicke 14 radial aus der Aktivierungsöffnung 31 hinaustretend angeordnet ist. Die Friktionssicke 14 wirkt gegen die Innenwand 32 der Matrize 20 und stellt somit einen Friktionsschluß zwischen den beiden Geschiebeteilen her.

Ferner wird deutlich, daß der Schraubenkopf 5 der Aktiviervorrichtung auf einem Absatz 33 in der Aufnahme 28 aufliegt, so daß beim Aktivieren der Aktiviervorrichtung der Schraubenkopf 5 in Bezug auf seine Anordnung in der Aufnahme 28 verbleibt und die Spannmutter 3 den Abstand zwischen dem Schraubenkopf 5 und der Spannmutter 3 verkürzend herauf gezogen wird. Dieses hat zum Vorteil, daß beim Aktivieren der Aktiviervorrichtung 1 keine neuen Oberflächenvertiefungen entstehen, in die Speisereste oder dergleichen eintreten könnten.

Aus diesen Erläuterungen wird deutlich, daß die erfindungsgemäße Aktiviervorrichtung 1 mit einfachen Mitteln und somit kostengünstig herstellbar ist, und daß insbesondere eine Herstellung der Verbindungselemente - Matrize 20 bzw. Patrize 28 - durch Mitgießen möglich ist.

### Zusammenstellung der Bezugszeichen

- 1: Aktiviervorrichtung
- 2: Aktivierschraube
- 3: Spannmutter
- 4: Spreizelement
- 5: Schraubenkopf
- 6: Schlitz
- 7: Schraubenschaft
- 8: Gewinde
- 9: Nut
- 10: Seitenfläche der Spannmutter
- 11: Einhängeabschnitt
- 12: vorderes Ende des Einhängeabschnittes
- 13: Friktionsabschnitt
- 14: Friktionssicke
- 15: Pfeil
- 16: Pfeil
- 17: Primärkrone (Wachsmodell)
- 18: Keramikplatzhalter
- 19: Primärkrone (Gußstück)
- 20: Matrize
- 21: Patrizenelement
- 22: Aufnahme
- 23: Retentionssteg
- 24: Schubverteilungsarm
- 25: Keramikplatzhalter
- 26: Fixiernase
- 27: Sekundärteil
- 28: Patrize
- 29: Aufnahme
- 30: Zahnprothese
- 31: Aktivierungsöffnung
- 32: Innenwand der Matrize
- 33: Absatz

## Patentansprüche

1. Aktiviervorrichtung für die dentale Prothetik zur Herstellung einer lösbaren Verbindung zwischen einem Sekundärteil mit einem Primärteil, welche Aktiviervorrichtung (1) ein Aktivierelement (2) aufweist, das mit einem Friktionsmittel (4) zusammenwirkt, welches beim Aktivieren der Vorrichtung zum Befestigen des Sekundärteils an dem Primärteil durch eine in dem Sekundärteil radial angeordnete Aktivierungsöffnung (31) aus dieser austretend bewegbar ist, **dadurch gekennzeichnet**, daß die Aktiviervorrichtung (1) zwei voneinander beabstandete und miteinander zusammenwirkend im Eingriff stehende Aktivierelemente (2, 3) umfaßt, deren Abstand zueinander zum Aktivieren der Vorrichtung einrichtbar ist, und daß zwischen den Aktivierelementen (2, 3) als Friktionsmittel ein oder mehrere, sich zumindest an einem der beiden Aktivierelemente (2, 3) abstützende Spreizelemente (4) angeordnet sind, die beim Aktivieren der Vorrichtung (1) zumindest abschnittsweise in radialer Richtung ausstellbar sind.

2. Vorrichtung nach Anspruch 1, **dadurch gekennzeichnet,** daß als erstes Aktivierelement eine Aktivierschraube (2) und daß als zweites Aktivierelement eine Spannmutter (3) vorgesehen ist.

3. Vorrichtung nach Anspruch 2, **dadurch gekennzeichnet,** daß die Aktivierschraube (2) im Übergang von ihrem Schraubenkopf (5) zu ihrem Schaft (7) eine umlaufende Nut (9) zur Aufnahme des oder der Spreizelemente (4) aufweist.

4. Vorrichtung nach einem der Ansprüche 1 bis 3, **dadurch gekennzeichnet,** daß ein einziges Spreizelement vorgesehen ist, welches als Spreizzunge (4) ausgebildet ist, die mit ihrem einen Ende an der Aktivierschraube (2) angelenkt und abgestützt ist und deren freies Ende als Friktionsteil (13) wirkend an der Spannmutter (3) abgestützt ist.

5. Vorrichtung nach Anspruch 4, **dadurch gekennzeichnet,** daß die Spreizzunge (4) einen abgewinkelten Einhängeabschnitt (11) mit einer U-förmigen Aufnahme zum Einsetzen desselben in die umlaufende Nut (9) der Aktivierschraube (2) aufweist.

6. Vorrichtung nach Anspruch 5, **dadurch gekennzeichnet,** daß das Ende des Einhängeabschnittes (12) der Spreizzunge (4) radial über den großen Durchmesser der Aktivierschraube (2) auskragend ausgebildet ist.

7. Vorrichtung nach Anspruch 4, 5 oder 6, **dadurch gekennzeichnet,** daß die Spreizzunge (4) an ihrem freien, als Friktionsteil (13) wirkenden Ende an ihrer von der Spannmutter (3) abgewandten Seite eine Friktionssicke (14) trägt.

8. Vorrichtung nach einem oder mehreren der Ansprüche 2 bis 7, **dadurch gekennzeichnet,** daß die Spreizzunge (4) mit ihrem als Friktionsteil (13) wirkenden Abschnitt an der Außenseite der Spannmutter (3) abgestützt ist, so daß durch Eindrehen des Gewindeabschnittes (8) der Aktivierschraube (2) die Spreizzunge (4) mit ihrer Friktionssicke (14) radial nach außen bewegbar ist.

9. Aktivierbares dentales Geschiebe mit einer Aktiviervorrichtung nach einem oder mehreren der Ansprüche 1 bis 8, **dadurch gekennzeichnet,** daß das Geschiebe eine Patrize (28) mit einer längsachsial angeordneten Aufnahme (29) zur Aufnahme der Aktiviervorrichtung (1) und mit einer radial angeordneten Aktivierungsöffnung (31) sowie eine Matrize (20) umfaßt, deren Patrizenaufnahme komplementär zur Aufnahme der Patrize (28) ausgebildet ist.

10. Geschiebe nach Anspruch 9, **dadurch gekennzeichnet,** daß die Innenkontur der Patrize (28) in ihrem unteren Abschnitt der Außenkontur einer als weiteres Aktivierelement verwendeten Spannmutter (3) entspricht, so daß die Spannmutter (3) in der Aufnahme (29) verdrehsicher gehalten ist.

11. Geschiebe nach Anspruch 9 oder 10, **dadurch gekennzeichnet,** daß die Patrize (28) innerhalb ihrer Aufnahme (29) zur Aufnahme der Aktiviervorrichtung (1) eine als Hinterschnitt ausgebildete Aussparung aufweist, die mit einem dem Spreizelement (4) zugeordneten Fixierelement (12) zum Fixieren der Aktiviervorrichtung (1) innerhalb der Patrize (28) zusammenwirkt.

12. Geschiebe nach einem oder mehreren der Ansprüche 9 bis 11, **dadurch gekennzeichnet,** daß an der der Aktivierungsöffnung (31) gegenüberliegenden Seite der Patrize (28) außenseitig Retentionen vorgesehen sind.

13. Geschiebe nach einem oder mehreren der Ansprüche 9 bis 12, **dadurch gekennzeichnet,** daß die Aktivierungsöffnung (31) der Patrize (28) als achsparalleler Spalt ausgebildet ist.

14. Mittel zum Herstellen eines Geschiebes nach einem oder mehreren der Ansprüche 9 bis 13 umfassend eine Aktiviervorrichtung (1), ein aus rückstandsfrei verbrennbarem Kunststoff hergestelltes Patrizenelement (21), einen Platzhalter (25) zur Erzeugung einer Patrizenaufnahme (29) sowie einen Platzhalter (18) zum Erzeugen der Matrize (20).

15. Mittel nach Anspruch 14, **dadurch gekennzeichnet,** daß die Platzhalter (18, 25) aus einem Keramikwerkstoff, insbesondere aus einen Al-Oxid hergestellt sind.

16. Verfahren zum Herstellen eines Geschiebes nach einem oder mehreren der Ansprüche 9 bis 13 unter Verwendung der Mittel nach Anspruch 14 oder 15 umfassend folgende Schritte:
a) Anwachsen des für die Erzeugung der Matrize (20) vorgesehenen Platzhalters (18) an das Wachsmodell (17) einer Primärkrone,
b) Gießen der Primärkrone,
c) Entfernen des Platzhalters (18),
d) Einsetzen des Patrizenelementes (21) in die Matrize (20) der gefertigten Primärkrone (19), wobei die Retentionen des Patrizenelementes (21) aus einem der Matrize (20) zugeordneten Retentionsspalt herausragt, mit einem anschließenden Anwachsen des Patrizenelementes (21) an die Sekundärmodulation (24),
e) Einsetzen des für die Erzeugung der in der Patrize (28) angeordneten Aufnahme (29) vorgesehenen Platzhalters (25) in die Aufnahme des Patrizenelementes (22),
f) Gießen der Sekundärmodulation,
g) Entfernen des Platzhalters (25),
h) Einsetzen der Aktiviervorrichtung (1) in die der Patrize (28) zugeordnete Aufnahme (29).

17. Verfahren nach Anspruch 16**, dadurch gekennzeichnet,** daß die Platzhalter (18, 25) durch Sandstrahlen entfernt werden.
